Europäisches Patentamt

European Patent Office

Office européen des brevets

(19)

(11) EP 0 899 077 A1

## (12) DEMANDE DE BREVET EUROPEEN

(43) Date de publication:
03.03.1999 Bulletin 1999/09

(51) Int Cl.⁶: **B29C 47/00**, B29C 47/04

(21) Numéro de dépôt: 98401418.3

(22) Date de dépôt: 11.06.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 29.08.1997 FR 9710789

(71) Demandeur: ITEP INTERNATIONAL
05000 Gap (FR)

(72) Inventeur: Bertreux, Rolland
05000 Gap (FR)

(74) Mandataire: Peuscet, Jacques
SCP Cabinet Peuscet et Autres,
78, avenue Raymond Poincaré
75116 Paris (FR)

(54) **Procede de fabrication d'un tuyau poreux a lisere, dispositif pour sa mise en oeuvre, tuyau obtenu par ledit procede et utilisation d'un tel tuyau en irrigation**

(57) L'invention concerne un procédé de fabrication d'un tuyau poreux à liseré, consistant à faire passer un mélange composé de particules de caoutchouc vulcanisé et de liant thermoplastique, dans une extrudeuse principale dans laquelle il est chauffé, à introduire une composition constituée de particules de liant thermoplastique précolorées dans une extrudeuse auxiliaire (90) dans laquelle elle est chauffée, à injecter localement ladite composition dans la tête (43) de l'extrudeuse principale pendant que le mélange précité passe dans cette dernière, à faire sortir le mélange et la composition à travers une filière, sous la forme d'un tuyau poreux présentant, au moins en surface, un liseré coloré.

FIG.12

# Description

La présente invention concerne un procédé de fabrication d'un tuyau poreux à liseré, un tel tuyau étant destiné en particulier à l'irrigation de terrains cultivés ou des espaces verts.

L'irrigation de terrains cultivés à l'aide de tuyaux poreux enterrés présente des avantages connus, par comparaison notamment avec un arrosage en surface : l'eau est amenée au voisinage des racines des plantes ; moins d'eau est nécessaire car elle n'est pas soumise au phénomène d'évaporation ; l'installation n'encombre pas la surface du terrain et cela convient bien lorsque, par exemple, le terrain reçoit une pelouse de jeux ou d'agrément. Les tuyaux poreux utilisés doivent être suffisamment souples pour épouser les formes du terrain et suffisamment rigides transversalement, c'est-à-dire selon leur section, pour qu'ils ne s'affaissent pas et maintiennent en forme le passage de l'eau d'irrigation à l'intérieur du tuyau tout le long de celui-ci.

De tels tuyaux poreux sont connus ; ainsi, par exemple, la demanderesse a décrit dans FR-A-2 716 835 un procédé de fabrication d'un tuyau poreux destiné à l'irrigation, comprenant les étapes consistant à

a) préparer un mélange homogène composé de particules de caoutchouc vulcanisé et de particules d'un liant thermoplastique

b) faire passer ledit mélange dans une extrudeuse dans laquelle il est chauffé ;

c) faire sortir ledit mélange de l'extrudeuse à travers une filière, à une vitesse linéaire d'extrusion, sous la forme d'un tuyau ;

d) plonger ledit tuyau, à la sortie de la filière, dans un bain de refroidissement dans lequel ledit tuyau est le siège d'une contraction linéaire ;

e) faire passer le tuyau, à la sortie du bain de refroidissement, entre deux roues de tirage, à une vitesse linéaire d'extraction ;

f) enrouler en bobine le tuyau à la sortie des roues de tirage.

Lors de sa mise en place dans le sol, le tuyau peut subir des étirements indésirables, à la suite, par exemple, d'une mauvaise manipulation. Un tel étirement a pour conséquence une augmentation locale de la porosité du tuyau, ce qui se traduit par un débit d'eau plus élevé au niveau de la zone étirée et donc par un débit d'eau insuffisant en aval de cette zone. Il serait donc souhaitable d'augmenter la résistance du tuyau à l'étirement ou, tout au moins, de pouvoir localiser les zones éventuellement étirées.

Etant donné qu'il est crucial pour un tuyau de ce type que sa porosité soit homogène sur toute sa longueur, il serait également souhaitable de pouvoir différencier les tuyaux de la demanderesse vis-à-vis des autres tuyaux de la concurrence, notamment dans le cas d'accidents ou d'incidents sur ces tuyaux.

La demanderesse a tout d'abord envisagé de marquer les tuyaux par un motif coloré, mais ces motifs risquent de s'effacer au cours du temps en raison de l'environnement agressif qui entoure les tuyaux, à savoir un écoulement continu d'eau dans le sol où est enterré le tuyau.

L'invention a donc pour but d'éliminer les inconvénients précités et de proposer un procédé de fabrication d'un tuyau poreux à liseré qui permette d'identifier les zones éventuellement étirées d'un tuyau. Un autre but de l'invention est de renforcer le tuyau à l'étirement.

A cet effet, l'invention a pour objet un procédé de fabrication d'un tuyau poreux à liseré, comprenant l'étape consistant à faire passer un mélange homogène composé de particules de caoutchouc vulcanisé et de particules de liant thermoplastique dans une extrudeuse principale dans laquelle il est chauffé, caractérisé par le fait qu'il comprend, en outre, les étapes consistant à :

- introduire une composition constituée de particules de liant thermoplastique précolorées ou de particules de liant thermoplastique et d'un colorant, dans une extrudeuse auxiliaire dans laquelle elle est chauffée,

- injecter localement ladite composition à partir de l'extrudeuse auxiliaire dans la tête de l'extrudeuse principale pendant que le mélange précité passe dans cette dernière,

- faire sortir ledit mélange et ladite composition de l'extrudeuse principale à travers une filière, sous la forme d'un tuyau poreux présentant, au moins en surface, un liseré coloré. On comprend ainsi, qu'en cas d'étirement du tuyau, le liseré sera également étiré et on pourra visuellement constater la zone ainsi étirée. En outre, ce liseré renforce le tuyau contre l'étirement.

La température de fonctionnement de l'extrudeuse auxiliaire est avantageusement comprise entre 50° et 180°C, de préférence entre 60° et 140°C. Par ailleurs, plus cette température est basse, plus le liseré est homogène.

De préférence, la composition précitée est injectée dans l'extrudeuse principale dans un canal annulaire défini entre la surface interne d'un support de filière et la surface externe d'un support de poinçon, en amont de la filière. La composition est, de préférence, injectée dans l'extrudeuse principale à un débit maximal compris entre 6 et 10 kg/heure pour obtenir un liseré d'environ 2 mm de largeur.

Avantageusement, le mélange précité contient de 60 à 80 % en poids de caoutchouc vulcanisé et le liant thermoplastique est, de préférence, du polyéthylène linéaire basse densité.

La composition à la base du liseré est, avantageusement, du polyéthylène en poudre ou en granulés déjà teintés ou avec du colorant.

Pour un procédé particulièrement économique, le caoutchouc vulcanisé est obtenu par récupération des bandes de roulement de pneumatiques usagés, ou des pneumatiques usagés complets.

L'invention vise également un dispositif pour la mise en oeuvre du procédé précité, comportant une extrudeuse principale dont la tête comporte un support de filière creux muni en bout d'une filière de façonnage du tuyau et un support de poinçon s'étendant à l'intérieur du support de filière, un canal annulaire étant défini entre lesdits supports pour le passage du mélange vers la filière, caractérisé par le fait qu'il comporte une extrudeuse auxiliaire montée parallèlement ou perpendiculairement à l'extrudeuse principale, la tête de l'extrudeuse auxiliaire débouchant dans le canal annulaire précité de la tête de l'extrudeuse principale pour y injecter la composition précitée.

Selon une autre caractéristique, la tête de l'extrudeuse principale est traversée par un orifice dont une extrémité débouche sur la surface interne du support de filière avec un diamètre d'environ 2 mm par exemple et dont l'extrémité opposée est reliée à la tête de l'extrudeuse auxiliaire, ledit orifice s'étendant sensiblement perpendiculairement à l'axe de la tête de l'extrudeuse principale.

Selon encore une autre caractéristique, l'orifice précité se prolonge à l'intérieur du canal annulaire de l'extrudeuse principale par une portion tubulaire d'environ 2 mm de diamètre par exemple. Cette portion tubulaire est avantageusement constituée d'un tube dont l'extrémité libre est biseautée du côté aval de l'extrudeuse principale. Cette portion tubulaire a, par exemple, une longueur comprise entre 0,5 et 4 mm, de préférence entre 1 et 3 mm.

L'invention a également pour objet un tuyau poreux obtenu par le procédé défini ci-dessus, ainsi que l'utilisation d'un tel tuyau pour l'irrigation de terrains cultivés, ledit tuyau poreux étant enterré, dans laquelle le tuyau est alimenté en eau sous une pression au moins égale à 49 kPa (5 mètres d'eau).

Dans un premier mode de réalisation, le tuyau poreux comporte en surface un liseré coloré, alors que dans un autre mode de réalisation, le liseré s'étend sur une partie au moins de l'épaisseur du tuyau à partir de sa surface externe, par exemple au moins 90 % de son épaisseur. Par exemple, pour un tuyau ayant un diamètre interne compris entre 12,7 et 13,5 mm et un diamètre externe compris entre 17 et 18 mm, le liseré peut avoir une épaisseur de 1 à 3 mm.

De préférence, le liseré s'étend sur au moins une longueur substantielle de la longueur du tuyau et, de préférence, de manière continue.

Pour mieux faire comprendre l'objet de l'invention, on va en décrire maintenant à titre purement illustratif et non limitatif, des exemples de réalisation représentés sur les dessins annexés.

Sur ces dessins :

- la figure 1 est un schéma général représentant un exemple de dispositif pour la mise en oeuvre du procédé selon l'invention, l'extrudeuse auxiliaire étant omise ;
- la figure 2 est une vue en coupe, éclatée, montrant les principales pièces constitutives de la tête de l'extrudeuse principale de la figure 1 ;
- la figure 3 est analogue à la figure 2, mais les pièces étant assemblées ;
- la figure 4 est un détail, à plus grande échelle, de la figure 3;
- la figure 5 est une vue selon V-V de la figure 4 ;
- la figure 6 est une vue selon VI-VI de la figure 2 ;
- la figure 7 est une vue selon VII-VII de la figure 2 ;
- la figure 8 est une coupe selon VIII-VIII de la figure 1 ;
- la figure 9 est une vue en coupe axiale, partielle, d'un tuyau obtenu par le procédé selon l'invention ;
- la figure 10 est une vue du support de filière selon la ligne X-X de la figure 2 ;
- la figure 11 est une vue en coupe selon XI-XI de la figure 10 ;
- la figure 12 est une vue analogue à la figure 11, mais représentant une variante de réalisation de l'invention, avec l'extrudeuse auxiliaire schématiquement illustrée ; et
- la figure 13 est une vue en coupe transversale du tuyau obtenu par la variante de la figure 12.

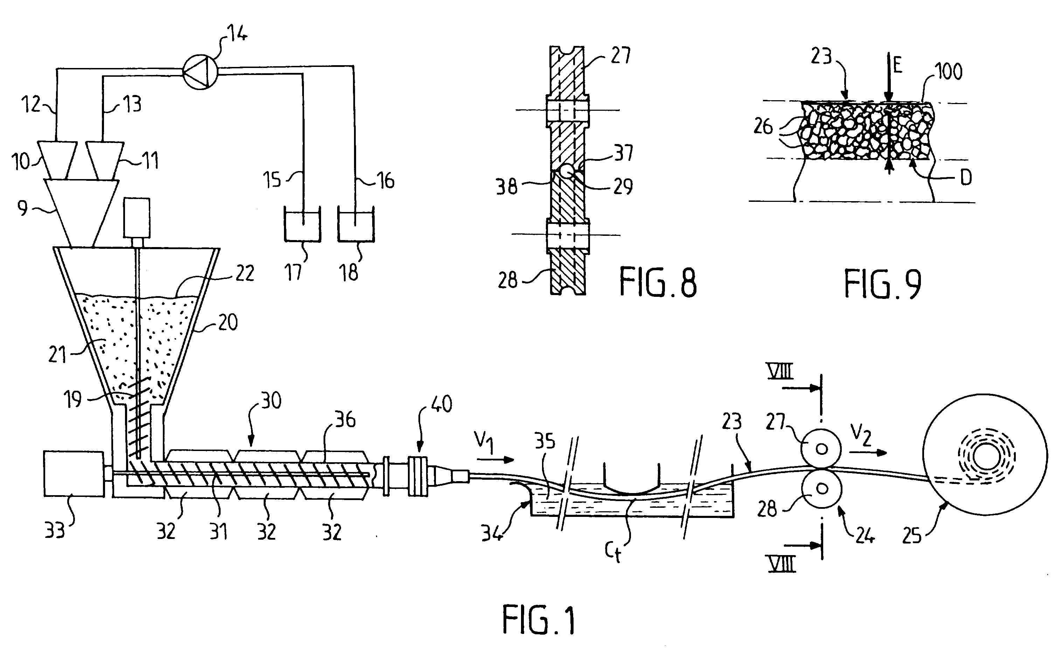

En se reportant à la figure 1, on voit que l'installation, pour la mise en oeuvre du procédé selon l'invention, comprend deux goulottes 10, 11 d'alimentation des constituants du mélange à savoir, respectivement, le caoutchouc vulcanisé sous forme de particules et le liant thermoplastique, également sous forme de particules. Une pompe d'alimentation 14 comporte deux conduits d'aspiration 15, 16 reliés à des réservoirs 17, 18 contenant chacun l'un des deux constituants du mélange à réaliser, et deux conduits de refoulement 12, 13 pour l'alimentation des goulottes 10, 11 alimentant elles-mêmes un mélangeur 9 à l'aide d'une vis pré-réglée à dosage constant; le mélangeur 9, fixé directement à la partie supérieure d'une trémie 20, alimente en constituants la trémie 20 pour l'alimentation, en mélange 21, de l'extrudeuse principale 30 ; l'homogénéité du mélange 21, dans les proportions définies ci-dessus, est assurée par un malaxeur 19 à axe vertical ; le niveau 22 du mélange dans la trémie 20 est réglé à une valeur constante : ceci est obtenu grâce à un détecteur du niveau 22, non représenté, qui pilote l'ouverture de la trappe du mélangeur 9 doté également d'un détecteur de niveau permettant l'appel des constituants du mélange pour la recharge du mélangeur 9 lorsque sa trappe s'est refermée après l'alimentation de la trémie 20 ; cette disposition évite que des variations de la pression statique due au mélange 21 dans la trémie 20 ne viennent perturber les conditions d'extrusion.

L'extrudeuse 30 comprend un fût 36 d'axe horizontal dans lequel est montée à rotation une vis d'extrusion 31 entraînable en rotation par un moteur 33 ; le fût 36 est entouré de caissons 32 répartis longitudinalement définissant des zones de régulation de température, laquelle est maintenue à des valeurs désirées grâce à des moyens de chauffage électrique et de refroidissement par soufflage d'air, non représentés. La tête 40 de l'extrudeuse 30 possède deux zones de chauffage, par colliers électriques, et un refroidissement par ventilation d'air pour la régulation de sa température ; la température de la tête 40 est ainsi maintenue à une température pratiquement constante, comprise entre 90 et 130°C.

A la sortie de la tête 40 de l'extrudeuse 30, qui met en forme un tuyau 23 et qui sera décrite plus en détails ci-après, le tuyau 23, sortant de la tête 40 à une vitesse linéaire $V_1$, est plongé dans un bac 34 contenant un liquide de refroidissement 35, comme de l'eau par exemple.

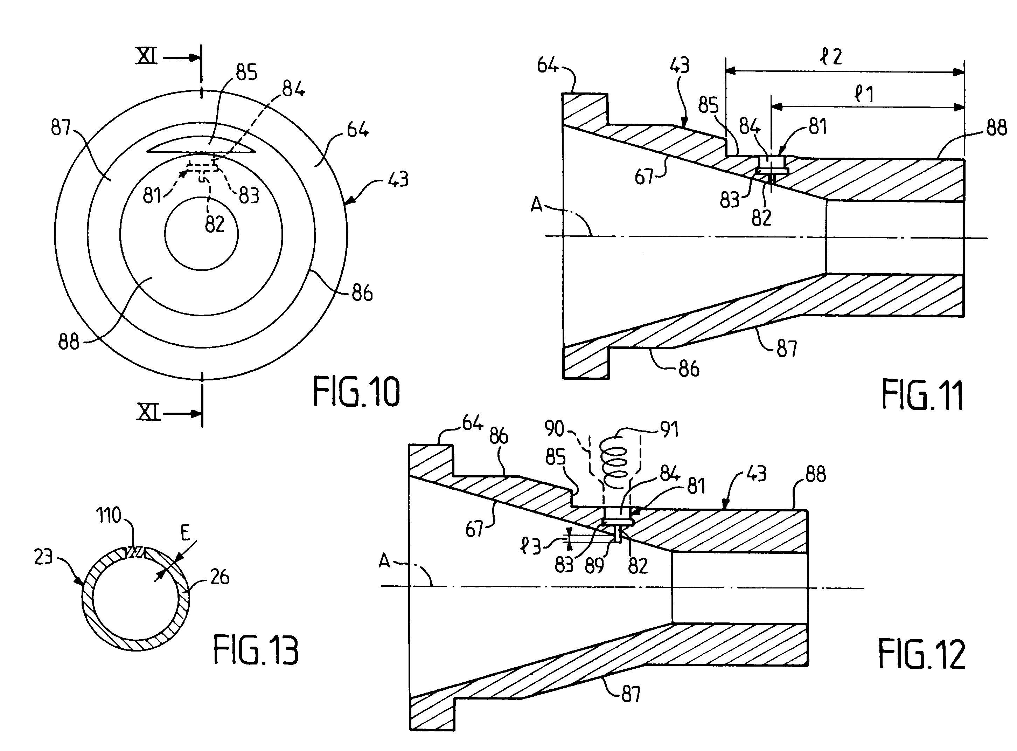

Le tuyau 23 est tiré hors du bac 34, à une vitesse linéaire $V_2$, par un extracteur 24 constitué de deux roues de tirage 27, 28 en forme de poulies à gorge dont la section est semi-circulaire ; les gorges sont bordées par deux pistes latérales circulaires, deux pistes 37 pour la roue de tirage 27, et deux pistes 38 pour la roue de tirage 28 ; les deux roues de tirage 27, 28 roulent l'une sur l'autre par l'intermédiaire des pistes circulaires 37, 38 en sorte qu'un passage circulaire 29 (figure 8) est défini, le tuyau 23 traversant le passage 29 avec un léger serrage pour obtenir le tirage du tuyau 23 à la vitesse $V_2$ ; le tuyau 23 est ensuite mis en bobine sur un enrouleur 25.

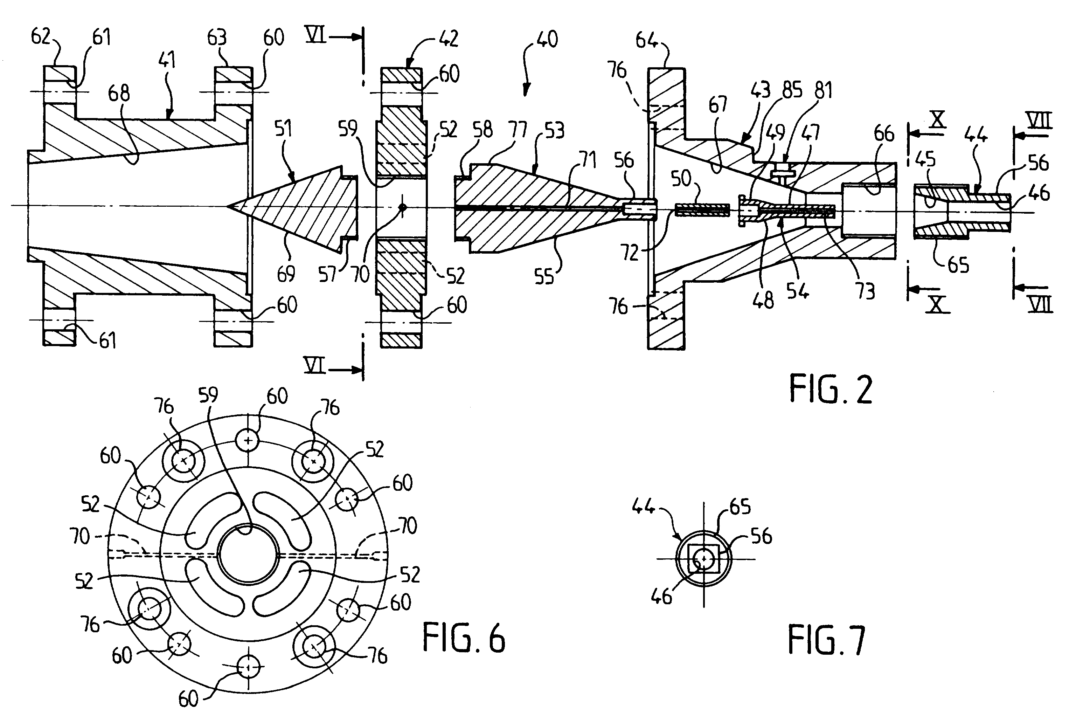

La tête 40 de l'extrudeuse 30, mieux visible sur les figures 2 à 7, comprend du côté du fût 36 de l'extrudeuse un étage de compression et du côté opposé un étage de mise en forme ; l'étage de compression est constitué d'un carter 41 traversé d'un passage axial tronconique 68 dont la petite base est située du côté du raccordement du carter 41 au fût 36 de l'extrudeuse, une bride de fixation 62 étant prévue à cet effet, munie de trous de fixation 61 ; l'étage de mise en forme comprend un support de filière 43 creux muni en bout d'un alésage 66 fileté dans lequel est monté par vissage le manchon 65 fileté extérieurement d'une filière 44 de façonnage du tuyau ; l'alésage 66 communique avec un alésage cylindrique de plus petit diamètre d'où s'étend un passage tronconique 67 ; le manchon 65 de la filière 44 est prolongé extérieurement, sur la droite par rapport aux figures, par une queue 56 dont la surface extérieure a une section carrée pour faciliter l'opération de vissage de la filière 44 dans le support 43 à l'aide d'une clé de forme carrée correspondante ; la filière 44 est percée d'un canal tronconique 45 dont la grande base est au droit de l'extrémité extérieure du manchon 65, le canal tronconique débouchant dans un canal cylindrique 46 dont le diamètre est égal à celui de la petite base du canal tronconique 45.

Le carter 41 de l'étage de compression et le support 43 de l'étage de mise en forme sont assemblés par l'intermédiaire d'un flasque 42, en forme générale d'un disque, muni d'un dispositif anti-turbulence ; le carter 41 est muni d'une bride 63 dans laquelle sont ménagés des trous de fixation 60 qui coopèrent avec des trous 60 de fixation correspondants prévus dans le flasque 42 ; de même, le support 43 est muni d'une bride 64 dans laquelle sont ménagés des trous de fixation 76 qui coopèrent avec des trous 76 de fixation correspondants prévus dans le flasque 42 visibles sur la figure 6.

Le flasque 42 est traversé par un alésage 59 cylindrique axial fileté intérieurement ; l'alésage 59 est destiné au montage par vissage, d'une part, du côté du carter 41 d'un cône de compression 51 et, d'autre part, du côté du support 43 de filière d'un support de poinçon 53 ; pour ce faire, le cône de compression 51 et le support 53 sont munis de socles circulaires, respectivement 57 et 58, filetés extérieurement, leur filetage correspondant à celui de l'alésage 59 du flasque 42.

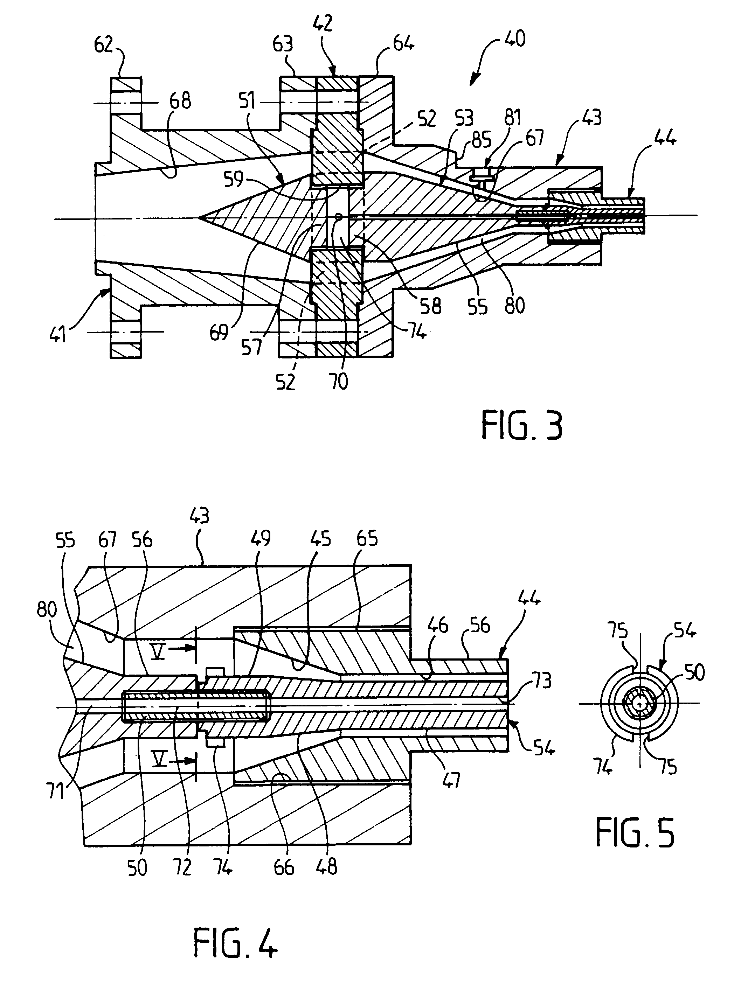

Le socle 57 porte un cône 69 dont la base est d'un diamètre légèrement supérieur à celui du socle 57 et définit une portée de contact annulaire avec la face transversale en regard du flasque 42 ; le socle 58 se prolonge selon une partie cylindrique 77 d'un diamètre légèrement supérieur à celui du socle 58 définissant également une portée de contact annulaire avec la face transversale en regard du flasque 42 ; la partie cylindrique 77 sert de base à un tronc de cône 55 dont la petite base se prolonge selon un embout cylindrique 56 de même diamètre ; lorsque le carter 41 et le flasque 42 sont assemblés, comme montré sur la figure 3, le passage tronconique 68 et le cône 69 définissent entre eux un canal annulaire dont la section décroît vers le flasque 42, l'inclinaison sur l'axe du passage 68 étant inférieure au demi-angle au sommet du cône 69, en sorte que le mélange y est soumis à une compression.

L'embout 56 du support 53 est muni d'un alésage cylindrique fileté intérieurement qui reçoit, comme montré sur la figure 4, une tige filetée 50 dont la longueur est supérieure à la longueur axiale dudit alésage ; la partie de la tige filetée 50 qui dépasse dudit alésage sert au montage par vissage d'un poinçon 54 dont l'extrémité cylindrique 49 est muni d'un alésage fileté intérieurement au pas de la tige filetée 50 ; l'extrémité cylindrique 49 est munie d'une collerette 74 ayant des fentes radiales 75 (figure 5) facilitant, à l'aide d'une clé appropriée, la préhension du poinçon 54 pour son vissage sur la tige filetée 50 elle-même préalablement vissée dans le support 53 ; l'extrémité cylindrique 49 se prolonge, du côté opposé à la collerette 74, selon un tronc de cône 48 lui-même prolongé selon un cylindre 47 ; lorsque le flasque 42 et le support 43 sont assemblés, comme le montre la figure 3, le tronc de cône 55 et le passage tronconique 67 définissent entre eux un canal annulaire 80 dont la section va en s'amenuisant vers la filière 44, les angles du tronc de cône 55 et du passage tronconique 67 ayant des valeurs relatives prévues en conséquence, en sorte que le mélange y est comprimé ; de la même façon, comme visible sur la figure 4, l'angle au sommet du tronc de cône 48 est inférieur à celui du canal tronconique 45 en sorte que la section du passage défini entre le tronc de cône 48 et le canal tronconique 45 décroit vers la sortie de la filière 44.

Bien entendu, l'espace radial ménagé entre le canal cylindrique 46 de la filière 44 et le cylindre 47 du poinçon 54 permet de définir l'épaisseur E désirée du tuyau 23, le diamètre extérieur du cylindre 47 définissant le diamètre D intérieur du tuyau 23 (figure 9): on dispose de plusieurs jeux de filière 44 et poinçon 54 adaptés à différentes valeurs souhaitées de E et D.

Comme montré sur la figure 3, la somme des hauteurs axiales des socles 57, 58 est inférieure à la longueur axiale de l'alésage 59 du flasque 42 en sorte qu'une chambre 74 est définie ; le flasque 42 est percé de canaux radiaux 70 (figure 6) faisant communiquer ladite chambre 74 avec l'extérieur ; le flasque 42 présente des passages axiaux 52 réparties circonférentiellement, en forme d'arcs de cercle, permettant au mélange de traverser le flasque 42 depuis l'étage de compression 41-51 vers l'étage de mise en forme 43-44-54.

Le support 53, la tige filetée 50 et le poinçon 54 sont munis d'un canal central respectivement 71, 72, 73 de faible diamètre, de l'ordre de cinq millimètres par exemple, en sorte que, lorsque la tête 40 est assemblée, un canal 71-72-73 fait communiquer la chambre 74 avec l'extérieur, à la sortie du poinçon 54 ; le rôle du canal 71-72-73 apparaîtra ci-après.

En se référant maintenant aux figures 10 et 11, on voit que le support de filière 43 est percé d'un orifice transversal 81 s'étendant radialement par rapport à l'axe A du support de filière 43. Cet orifice 81 débouche sur la surface interne tronconique du passage 67 en face du tronc de cône 55 du support de poinçon 53, comme mieux visible sur la figure 3. Cet orifice 81 est constitué, à partir de la surface tronconique 67, d'un premier tronçon 82 de 2 mm de diamètre, se prolongeant par un deuxième tronçon cylindrique 83 de 16,5 mm de diamètre et de 3 mm de longueur, qui se termine par un troisième tronçon 84 de 16 mm de diamètre et de 7 mm de longueur débouchant sur la surface externe du support de filière 43. Les deuxième et troisième tronçons 83 et 84 de l'orifice 81 sont destinés à recevoir l'extrémité de sortie de la tête d'une extrudeuse auxiliaire 90, représentée en traits interrompus sur la figure 12. Cette extrudeuse auxiliaire 90 est une extrudeuse à monovis 91 destinée à recevoir une composition constituée, par exemple, de particules de polyéthylène précolorées ou de particules de polyéthylène et de colorant. Cette extrudeuse auxiliaire 90 est montée perpendiculairement à l'axe A de l'extrudeuse principale 30. Un lamage 85 est ménagé autour de l'orifice 81 sur la surface externe du support de filière 43 pour permettre le montage de la tête de l'extrudeuse auxiliaire 90. De préférence, la monovis 91 de l'extrudeuse auxiliaire 90 tournera à une vitesse maximale de 280 tours/minute.

Bien entendu, si on veut obtenir plusieurs liserés longitudinaux sur le tube fini, on peut prévoir plusieurs orifices 81 agencés sur la périphérie externe du support de filière 43 en différentes positions angulaires par rapport à l'axe A. On pourrait même concevoir un liseré non linéaire, en prévoyant un orifice dont la sortie se déplacerait circonférentiellement par rapport à l'axe A.

En se référant maintenant plus particulièrement à la figure 10, on voit que le support de filière 43 est constitué de plusieurs parties étagées sur sa surface externe. En partant de sa bride circulaire 64 du côté amont, cette bride 64 est séparée par un épaulement d'une portion cylindrique 86 qui se prolonge par une partie tronconique 87 à travers laquelle est formé le lamage 85 et l'orifice 81 précités, laquelle portion tronconique 87 se prolonge à son tour par sa petite base par une portion cylindrique 88 du côté aval du support de filière 43. Bien que cela ne soit pas représenté sur les figures 10 à 12, la portion cylindrique terminale 88 peut également être munie d'un alésage fileté analogue à l'alésage 66 précité pour permettre le montage par vissage de la filière 44.

A titre d'exemple de réalisation, on peut indiquer que le support de filière 43 de l'extrudeuse principale présente, à son extrémité amont du passage tronconique intérieur 67, un diamètre intérieur de 130 mm, et à son extrémité aval de la portion cylindrique 88, un diamètre intérieur de 40 mm et un diamètre extérieur de 90 mm. L'axe de l'orifice 81 est, par exemple, à une distance $\ell 1$ de 105 mm de l'extrémité aval du support de filière et le lamage 85 se termine à une distance $\ell 2$ de 130 mm de ladite extrémité aval.

La composition de polyéthylène colorée injectée dans l'extrudeuse principale par l'extrudeuse auxiliaire peut être plus ou moins fluide, selon la température d'utilisation dans l'extrudeuse auxiliaire, et on détermine la pression d'injection de cette composition de manière adaptée à la pression régnant dans le canal annulaire 80 précité.

En se référant maintenant à la figure 9, on voit, en coupe partielle axiale, le tuyau poreux avec son liseré superficiel 100 obtenu avec l'agencement des figures 10 et 11. Ce liseré forme une âme linéaire superficielle qui constitue en outre un renfort du tuyau contre l'étirement étant donné que ce liseré est essentiellement constitué de PET qui présente une résistance à l'étirement bien supérieure à un mélange de caoutchouc et de PET. Bien entendu, ce liseré peut être de toute couleur adaptée en fonction du colorant introduit dans la composition injectée par l'extrudeuse auxiliaire 90.

Dans le mode de réalisation de la figure 12, l'orifice 81 est muni d'un tube 89 qui est ajusté dans le tronçon 82 et présente sensiblement le même diamètre. Ce tube 89 fait saillie à l'intérieur du support de filière 43 avec son extrémité libre située dans le canal annulaire 80 précité. Ce tube 89 peut présenter une longueur $\ell 3$ comprise entre 1 et 3 mm par exemple, en fonction de l'épaisseur désirée du liseré par rapport à l'épaisseur totale du tube que l'on va obtenir. De préférence, ce tube 89 présente une longueur inférieure à la dimension radiale du canal annulaire 80 au niveau de sa section passant par l'orifice 81, afin que le liseré 110 ne dépasse pas 90 % de l'épaisseur du tuyau (voir figure 13).

Dans une variante avantageuse, et bien que cela ne soit pas représenté, l'extrémité libre du tube 89 est biseautée dans la direction aval du support de filière pour faciliter l'écoulement de la composition à partir de l'extrudeuse auxiliaire dans l'extrudeuse principale. En fonctionnement, on comprendra que le mélange de caoutchouc et de polyéthylène viendra heurter la face amont du tube 89 et le contournera, ce qui aura pour effet de créer une légère dépression du côté de la face aval du tube 89, facilitant ainsi la sortie de la composition dans l'extrudeuse principale.

En se référant maintenant à la figure 13, on voit, en section transversale, le tuyau poreux 23 muni d'un liseré 110 sur toute son épaisseur et sur un arc de cercle d'environ 2 mm de largeur, correspondant au diamètre du tube 89 dans le cas du support de filière 43 de la figure 12.

La présence de ce liseré coloré visible en surface du tuyau donne également l'avantage de pouvoir fabriquer des tuyaux avec différentes couleurs de liseré en fonction des délais de garantie ou des dates de fabrication.

L'introduction de la composition dans l'écoulement de mélange à travers l'extrudeuse principale étant localisée, elle ne provoquera pas de perturbations dans cet écoulement et ne freinera pas non plus de manière significative la vitesse d'extrusion du tuyau. En outre, comme cette composition est injectée au voisinage de la sortie de l'extrudeuse principale, cette composition n'aura pas, ou peu, tendance à se mélanger avec le reste du mélange, rendant ainsi le liseré clairement identifiable dans le produit fini.

De bons résultats sont obtenus avec une tête d'extrusion 40 dans laquelle : le passage tronconique 68 a une longueur axiale de 200 mm, les diamètres des bases étant de 50 et 100 mm ; le cône 69 a une longueur de 110 mm et une base de 70 mm de diamètre ; la partie cylindrique 77, le tronc de cône 55 et l'embout 56 ont des longueurs respectivement de 40 mm, 100 mm et 20 mm, tandis que les diamètres de la partie cylindrique 77 et de l'embout 56 sont respectivement de 70 et 25 mm ; le passage tronconique 67 du support 43 a une longueur de 125 mm et des bases dont les diamètres sont 110 mm et 30 mm.

Pour l'obtention d'un tube 23 où D = 16 mm et E = 2,8 mm, le poinçon 54 a une extrémité cylindrique 49, un tronc de cône 48 et un cylindre 47 dont la longueur axiale est respectivement de 20 mm, 25 mm, 60 mm, les bases du tronc de cône 48 ayant un diamètre de 20 mm et 16 mm ; le canal tronconique 45 de la filière 44 a une hauteur axiale de 40 mm et les bases des diamètres de 45 mm et 22 mm, la longueur axiale du canal cylindrique 46 étant de 60 mm.

Pour réaliser un tuyau poreux selon l'invention, dans le dispositif selon la figure 1, on part d'un caoutchouc vulcanisé et d'un liant thermoplastique, tous deux sous forme de poudre.

Le caoutchouc vulcanisé peut être de tout type; on préfère, pour des raisons économiques, broyer des pneumatiques usagés récupérés, en particulier leurs bandes de roulement ; la taille des particules de caoutchouc broyé est comprise entre 200 et 600 microns, mieux entre 400 et 500 microns.

Le liant thermoplastique peut être également de tout type, mais on préfère le polyéthylène, en particulier le polyéthylène linéaire basse densité, dont la densité est de l'ordre de 0,9 g/cm$^3$. Le liant thermoplastique de la composition destinée à former le liseré peut être différent du liant thermoplastique utilisé dans le mélange.

Le mélange réalisé contient entre 60 et 80 %, en poids, de caoutchouc vulcanisé, la proportion correspondante de polyéthylène étant de 40 à 20 % ; le mélange ne contient que du caoutchouc et du liant ; en effet, le polyéthylène linéaire basse densité présente l'avantage que ses chaînes ne sont pas détruites dans les conditions de l'opération d'extrusion ; bien entendu, si un autre liant est utilisé, il est possible, dans certains cas, d'ajouter au mélange un stabilisateur évitant la destruction des chaînes du liant thermoplastique.

Le niveau 22 de ce mélange dans la trémie 20 est régulé ; l'expérience a montré qu'une régulation du niveau 22 à une hauteur de plus ou moins 10 cm est suffisante pour ne pas perturber les conditions d'extrusion, la hauteur totale de la trémie 20 étant de l'ordre de 80 cm à 100 cm.

Sur la figure 1, on a représenté trois caissons 32 définissant des zones de régulation de température du fût 36 ; en variante, il y a quatre caissons 32. Les températures régulées s'étendent de 90 à 150°C ; elle croit depuis la zone proche de la trémie 20 jusqu'à la zone proche de la tête 40 de l'extrudeuse; une température supérieure de 140°C, au lieu de 150°C, a donné également de bons résultats, dans certains cas. Deux zones de régulation de température sont prévues pour la tête 40 de l'extrudeuse, ladite température étant plus faible que celles du fût 36.

La figure 9 montre en coupe, partiellement, un tuyau 23 constitué de particules 26 de caoutchouc vulcanisé recouvertes de polyéthylène et plus ou moins agglomérées, représentées à grande échelle, le tuyau 23 ayant un diamètre intérieur D et une épaisseur radiale E. Ces particules 26 sont recouvertes en surface par les particules de PET constituant le liseré 100.

La vitesse linéaire $V_1$ d'extrusion utilisée, exprimée en mètres à l'heure, est comprise entre 450 et 1 000 ; elle est choisie en fonction de D et E désirés : par exemple, si D est de 13 mm et E de 2 mm, elle est de l'ordre de 500 mètres à l'heure, la proportion de caoutchouc dans le mélange étant de l'ordre de 65 %. La vitesse linéaire $V_2$ d'extraction est choisie, conformément à l'invention, en tenant compte de la contraction linéaire $C_t$ du tuyau dans le bain de refroidissement : selon cet exemple, la température du bain étant de 10°C, $C_t$ est égal à 12 % ; $V_2$ est choisie supérieure à 88 % de $V_1$ soit ici égale à 110 % de $V_1$ ; dans ces conditions, le tuyau 23 obtenu a une porosité uniforme sur toute sa longueur. Bien que l'invention se réfère à un exemple particulier décrit dans FR-A-2 716 835, qui est incorporé ici par référence, elle n'y est pas limitée.

Le résultat selon l'invention est obtenu pour toute une gamme de tuyaux ; si l'on définit celle-ci par le diamètre D et le rapport $\frac{D}{E}$, le diamètre D peut aller de 10 mm à 20 mm, voir au delà, et le rapport $\frac{D}{E}$ peut avantageusement être compris entre 5 et 7, mais ce rapport peut descendre jusqu'à 2 et monter jusqu'à 10.

Le passage du tuyau 23 dans le bain de refroidissement est facilité lorsque le tuyau 23 a une certaine raideur ; si ce n'est pas le cas, il est possible de souffler de l'air dans la chambre 74 par les canaux radiaux 70 ; l'air ainsi soufflé traverse le conduit 71-72-73 et pénètre à l'intérieur du tuyau 23, en sortant du poinçon 54 et en conférant au tuyau 23 une certaine tenue permet de tenir la valeur de D à la valeur désirée ; lorsque l'on ne souffle pas d'air dans la chambre 74, le conduit 71-72-73 et les canaux radiaux 70, à l'atmosphère, servent pour le dégazage.

La mise en traction du tuyau 23 pendant son élaboration, due au phénomène de contraction dans le bain de refroidissement combiné à la valeur relative des vitesses $V_1$ et $V_2$, nécessite une adhérence du tuyau 23 au niveau du passage 29 défini par les roues 27, 28 de l'extracteur 24 ; cette adhérence peut être obtenue par l'état de la surface extérieure du tuyau, relativement rugueuse, notamment lorsque le diamètre extérieur du tuyau est grand ; lorsque ce diamètre est insuffisant, en particulier lorsqu'il est inférieur à 20 mm, on préfère prévoir le diamètre du passage circulaire 29 légèrement inférieur au diamètre extérieur du tuyau 23 et réaliser, ainsi, un serrage du tuyau par les roues 27, 28 ; par exemple, un serrage de quelques pour-cents est suffisant, comme 3 % pour un tuyau dont le diamètre extérieur est de 17 mm.

Lorsque le tuyau 23 est enterré dans un terrain et alimenté en eau pour l'irrigation de celui-ci, il est nécessaire, notamment lorsque le tuyau est de grande longueur, 200 mètres par exemple, d'assurer son remplissage en maîtrisant les pertes de charge dues à sa porosité et ce quelles que soient les dénivellations du terrain, en sorte que le débit d'eau d'irrigation soit constant tout au long du tuyau ; ceci est obtenu en alimentant le tuyau 23 sous une pression d'eau suffisante ; celle-ci est au moins égale à 49 kPa (5 mètres de hauteur d'eau), et peut être comprise entre 49 et 98 kPa (5 et 10 mètres de hauteur d'eau), voire jusqu'à 0,49 MPa (50 mètres). Pour fixer les idées, une alimentation sous 59 kPa (6 mètres d'eau) permet un débit d'eau d'irrigation de 2 litres par minute et par mètre de tuyau.

## Revendications

1. Procédé de fabrication d'un tuyau poreux à liseré, comprenant l'étape consistant à faire passer un mélange homogène (21) composé de particules de caoutchouc vulcanisé et de particules d'un liant thermoplastique, dans une extrudeuse principale (30) dans laquelle il est chauffé, caractérisé par le fait qu'il comprend, en outre, les étapes consistant à :

   - introduire une composition constituée de particules de liant thermoplastique précolorées ou de particules de liant thermoplastique et d'un colorant, dans une extrudeuse auxiliaire (90) dans laquelle elle est chauffée,
   - introduire localement ladite composition à partir de l'extrudeuse auxiliaire (90) dans la tête (40) de l'extrudeuse principale (30) pendant que le mélange précité passe dans cette dernière,
   - faire sortir ledit mélange et ladite composition de l'extrudeuse principale (30) à travers une filière (44), sous la forme d'un tuyau poreux (23) présentant, au moins en surface, un liseré coloré (100, 110).

2. Procédé selon la revendication 1, caractérisé par le fait que la température de fonctionnement de l'extrudeuse auxiliaire (90) est comprise entre 50° et 180°C, de préférence entre 60° et 140°C.

3. Procédé selon la revendication 1 ou 2, caractérisé par le fait que la composition précitée est injectée dans l'extrudeuse principale (30) dans un canal annulaire (80) défini entre la surface interne (67) d'un support de filière (43) et la surface externe (55) d'un support de poinçon (53), en amont de la filière (44).

4. Procédé selon l'une des revendications précédentes, caractérisé par le fait que la composition est injectée dans l'extrudeuse principale à un débit maximal de 10 kg/heure.

5. Procédé selon l'une des revendications précédentes, caractérisé par le fait que le mélange précité (21) contient de 60 à 80 % en poids de caoutchouc vulcanisé et un liant thermoplastique constitué de préférence par du polyéthylène linéaire basse densité.

6. Procédé selon l'une des revendications précédentes, caractérisé par le fait que la composition à la base du liseré (100, 110) est du polyéthylène en poudre ou en granulés déjà teintés ou avec du colorant.

7. Dispositif pour la mise en oeuvre du procédé selon l'une des revendications précédentes, comportant une extrudeuse principale (30) dont la tête (40) comporte un support de filière creux (43) muni en bout d'une filière (44) de façonnage du tuyau (23) et un support de poinçon (53) s'étendant à l'intérieur du support de filière, un canal annulaire (80) étant défini entre lesdits supports pour le passage du mélange (21) vers la filière, caractérisé par le fait qu'il comporte une extrudeuse auxiliaire (90) dont la tête débouche dans le canal annulaire (80) précité de la tête (40) de l'extrudeuse principale pour y injecter la composition précitée.

8. Dispositif selon la revendication 7, caractérisé par le fait que la tête (40) de l'extrudeuse principale est traversée par un orifice (81) dont une extrémité (82) débouche sur la surface interne (67) du support de filière (43) et dont l'extrémité opposée (84) est reliée à la tête de l'extrudeuse auxiliaire (90).

9. Dispositif selon la revendication 7 ou 8, caractérisé par le fait que l'orifice (81) précité se prolonge à l'intérieur du canal annulaire (80) de l'extrudeuse principale (30) par une portion tubulaire (89).

10. Dispositif selon la revendication 9, caractérisé par le fait que cette portion tubulaire est constituée d'un tube (89) dont l'extrémité libre est biseautée du côté aval de l'extrudeuse principale (30).

11. Dispositif selon la revendication 9 ou 10, caractérisé par le fait que ladite portion tubulaire (89) a une longueur comprise entre 0,5 et 4 mm, de préférence entre 1 et 3 mm.

12. Tuyau poreux, caractérisé par le fait qu'il est obtenu par le procédé selon l'une des revendications 1 à 6 et comporte au moins en surface un liseré coloré (100, 110).

13. Tuyau selon la revendication 12, caractérisé par le fait que le liseré (110) s'étend sur une partie au moins de l'épaisseur du tuyau à partir de sa surface externe, par exemple environ 90 % de son épaisseur.

14. Tuyau selon la revendication 12 ou 13, caractérisé par le fait que le liseré (100, 110) s'étend sur au moins une longueur substantielle du tuyau (23) et, de préférence, de manière continue.

15. Utilisation d'un tuyau poreux selon l'une des revendications 12 à 14 pour l'irrigation de terrains cultivés, ledit tuyau poreux étant enterré, caractérisée par le fait que le tuyau (23) est alimenté en eau sous une pression au moins égale à 49 kPa (5 mètres d'eau).

FIG.8

FIG.9

FIG.1

EP 0 899 077 A1

FIG. 2

FIG. 6

FIG. 7

EP 0 899 077 A1

FIG. 3

FIG. 4

FIG. 5

FIG.11

FIG.12

FIG.10

FIG.13

EP 0 899 077 A1

## Office européen des brevets

## RAPPORT DE RECHERCHE EUROPEENNE

Numéro de la demande

EP 98 40 1418

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | FR 2 716 835 A (ITEP INT) 8 septembre 1995 <br> * le document en entier * <br>--- | 1-15 | B29C47/00 <br> B29C47/04 |
| Y | US 4 182 582 A (COJOCARO ADRIANA ET AL) 8 janvier 1980 <br> * colonne 1, ligne 11 - ligne 16 * <br> * colonne 3, ligne 36 - colonne 4, ligne 44 * <br> * revendications 1-3,6; figures 1-3; exemple 2 * <br>--- | 1-15 | |
| A | US 5 190 706 A (KNAUS DENNIS A) 2 mars 1993 <br> * figure 1 * <br>--- | 1-11 | |
| A | US 3 343 568 A (T. E. BRANSCUM ET AL) 26 septembre 1967 <br> * le document en entier * <br>--- | 1-11 | |
| A | EP 0 378 335 A (MITSUI PETROCHEMICAL IND) 18 juillet 1990 <br> * revendication 6; figures * <br>----- | 1,12-15 | DOMAINES TECHNIQUES RECHERCHES (Int.Cl.6) <br><br> B29C |

Le présent rapport a été établi pour toutes les revendications

| Lieu de la recherche | Date d'achèvement de la recherche | Examinateur |
|---|---|---|
| LA HAYE | 23 novembre 1998 | Jensen, K |

# EP 0 899 077 A1

**ANNEXE AU RAPPORT DE RECHERCHE EUROPEENNE**
**RELATIF A LA DEMANDE DE BREVET EUROPEEN NO.**

EP 98 40 1418

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-11-1998

| Document brevet cité au rapport de recherche | | Date de publication | Membre(s) de la famille de brevet(s) | | | Date de publication |
|---|---|---|---|---|---|---|
| FR 2716835 | A | 08-09-1995 | AU | 1815995 | A | 18-09-1995 |
| | | | DE | 697949 | T | 22-10-1998 |
| | | | EP | 0697949 | A | 28-02-1996 |
| | | | ES | 2116949 | T | 01-08-1998 |
| | | | WO | 9523681 | A | 08-09-1995 |
| | | | IL | 112790 | A | 13-07-1997 |
| US 4182582 | A | 08-01-1900 | AUCUN | | | |
| US 5190706 | A | 02-03-1993 | US | 4919864 | A | 24-04-1990 |
| US 3343568 | A | 26-09-1967 | AUCUN | | | |
| EP 0378335 | A | 18-07-1990 | JP | 2182121 | A | 16-07-1990 |
| | | | JP | 2633670 | B | 23-07-1997 |
| | | | CA | 2007139 | A,C | 07-07-1990 |
| | | | CN | 1043902 | A,B | 18-07-1990 |
| | | | DE | 69007801 | D | 11-05-1994 |
| | | | DE | 69007801 | T | 28-07-1994 |
| | | | ES | 2064609 | T | 01-02-1995 |
| | | | US | 5181659 | A | 26-01-1993 |

EPO FORM P0460

Pour tout renseignement concernant cette annexe : voir Journal Officiel de l'Office européen des brevets, No.12/82

14